(19)

Europäisches
Patentamt
European
Patent Office
Office européen
des brevets

(11) **EP 2 744 219 A1**

(12) **EUROPEAN PATENT APPLICATION**

(43) Date of publication:
**18.06.2014 Bulletin 2014/25**

(51) Int Cl.:
*H04N 21/442* [(2011.01)]    *G06Q 30/02* [(2012.01)]

(21) Application number: **12306589.8**

(22) Date of filing: **14.12.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Thomson Licensing
92130 Issy-les-Moulineaux (FR)**

(72) Inventors:
• **Massoulie, Laurent
92443 Issy-les-Moulineaux (FR)**
• **Heimlicher, Simon
92443 Issy-les-Moulineaux (FR)**

(74) Representative: **Huchet, Anne et al
TECHNICOLOR
European Patent Operations
1-5, rue Jeanne d'Arc
92443 Issy-les-Moulineaux Cedex (FR)**

(54) **Prediction of user appreciation of items and corresponding recommendation method**

(57)    Method for predicting a first user's appreciation of a first item, comprising the following steps:

a) learning (10) at least a first appreciation of the first user for one second item;

b) learning (10) other appreciations of other users of the plurality of items;

c) clustering (14) the users into a finite number of user clusters;

d) clustering (14) the plurality of items into a finite number of item clusters;

e) establishing (16) a weight function that expresses statistics of a user giving a appreciation r for an item i conditioned on the user being in a user cluster $t$ and the item being in an item cluster f;

f) calculating (18,20) for each user his user profile and for each item its item profile by exchanging messages between all user-item pairs for which the appreciations are known; and

g) predicting (22) the first user's appreciation of the first item.

FIG.2

EP 2 744 219 A1

**Description**

FIELD OF THE INVENTION

The present invention generally relates to the field of recommendation systems which generally seek to predict the appreciation, i.e. the rating or preference that a user would give to an item. More particularly, the invention deals with the prediction of the appreciation of a single user or a group of multiple users for an item.

Thus, the invention concerns a method of prediction of user appreciation of an item including, but not limited to, multimedia content items. It also concerns a recommendation method of an item to a single user or to a plurality of users, and a corresponding recommendation system. It also concerns a computer program implementing the recommendation method of the invention.

BACKGROUND OF THE INVENTION

The approaches described in this section could be pursued, but are not necessarily approaches that have been previously conceived or pursued. Therefore, unless otherwise indicated herein, the approaches described in this section are not prior art to the claims in this application and are not admitted to be prior art by inclusion in this section.

Recommender systems are fast becoming one of the cornerstones of the Internet. In a world with ever increasing choices, they are one of the most effective ways of matching users with items. Today, many websites use some form of such systems. Recommendation engines ask users to rate certain items, e.g. books, movies, or songs, infer the ratings of other items from this data, and use these inferred ratings to recommend new items to users.

It is well known, for example from the document EP2434723, that it is possible to use user and content profiling in order to enable targeted content recommendations to users.

It is also known, for example from the paper of Byung-Hak Kim, Arvind Yedla, and Henry D. Pfister : "IMP: A Message-Passing Algorithm for Matrix Completion", 6th International Symposium on Turbo Codes and Iterative Information Processing, ISTC 2010, 6-10 September 2010, pp 462-466, an inference system that is based on message passing. As an example, in this paper, a latent factor model is assumed and belief propagation is used to classify users and items into clusters.

However, using the conventional recommendation systems, the data collected, if anonymized at all, can be de-anonymized and compromise the privacy of those users who submitted ratings. Besides, the known systems do not enable inference for a group of multiple users, e.g. to recommend a movie suitable for an entire family.

SUMMARY OF THE INVENTION

The present invention proposes a solution for improving the situation.

Accordingly, the present invention provides a method for predicting a first user's appreciation of a first item from a plurality of items, comprising the following steps:

a) learning at least a first appreciation of the first user for at least one second item of the plurality of items, said second item being different from the first item;
b) learning other appreciations of other users, different from said first user, of the plurality of items;
c) clustering the users into a finite number of user clusters based on said appreciations;
d) clustering the plurality of items into a finite number of item clusters based on the appreciations;
e) establishing a weight function $w(r|t,f)$ that expresses statistics of a user giving an appreciation $r$ for a given item $i$ conditioned on the user being in a user cluster $t$ and the given item being in an item cluster $f$;
f) calculating for each user, including the first user, his user profile, called taste, and for each item of the plurality of items its item profile, called flavour, by exchanging messages between all user-item pairs for which the appreciations are known, said messages being derived from the appreciation of the item by the user in each pair and from the weight function; and
g) predicting the first user's appreciation of the first item on the basis of the calculated taste of the first user, the calculated flavour of the first item and the weight function.

By the use of message passing, and a specific initialization procedure of the weight function, the method of the present invention provides a robust prediction of the user appreciation. Indeed, after a suitable number of messages have been exchanged, the messages can be expected to converge. At this point, the taste of every user and the flavour of every item is in the state that is most compatible with the weight function.

The method of the invention permits an implementation of a fully distributed system, i.e. where every user and every item are independent devices that only communicate by passing messages.

Advantageously, the appreciation r is an integer, preferably comprised between 1 and 5.

The present invention assumes that the appreciation of a first item by a first user is determined based on observations of prior interactions between other users and the plurality of items and prior interactions between the first user and items others than the first item. Such observations may for example be manifested through the users indicating interest through searching for, renting, or purchasing the item, or by explicitly expressing their appreciation in the form of a rating. Without limitation of generality, in a preferred embodiment, it is assumed that such observations are expressed as, or can be mapped to, a finite integer referred to as the appreciation of a given user for a given item.

Advantageously, the taste of a user is expressed as a probability distribution over a finite number of possible tastes and the flavour of an item is expressed as a probability distribution over a finite number of possible flavours.

Preferably, the number of possible tastes and the number of possible flavours are comprised between 10 and 100.

Preferably, the method comprises a step of distortion of the appreciations before the steps c) and d) of clustering the users and the items.

Advantageously, the step of distortion of the appreciations comprises:

h) substituting at least one of the appreciations by another appreciation drawn from a suitable probability distribution; and/or

i) suppressing at least one of the appreciations; and/or

j) adding at least one further appreciation that is drawn from a suitable probability distribution.

Preferably, the exchanged messages are distorted by:

k) adding noise to at least one message; and/or

l) suppressing at least one message; and/or

m) adding at least one message, particularly between a user and an item who did not exchange messages.

This distortion reduces the identifiability of users. Indeed, even if messages are exchanged anonymously, information about the sender may be still leaked through the user's profile as well as through the message itself.

In a preferred embodiment, noise is introduced to the messages and to the profile of the sender, i.e. the user's taste if the sender is a user or the item's flavour if the sender is an item, that is sent along with them.

To further obfuscate the data of users, the users may abstain from exchanging messages with a sufficient number of items they have rated and to instead exchange messages with a suitable number of items they have not rated. Since it is not defined what message a user should send to an item he has not rated, several ways may be implemented to generate messages that will only have a negligible effect on the global working of the message passing scheme.

As an example, the user could pick a rating uniformly at random. Alternatively, the item might make its profile public and the user could then infer which message to generate in order not to affect the item's profile.

Preferably, the exchanged messages are numerical vectors.

Advantageously, the calculating step f) comprises an initialization of each user's taste to an average taste.

Then, it is possible to derive the exchanged messages such that every message from a user to an item depends only on the user's initial taste, the set of messages the user has received from other items he has rated, and the weight function.

Advantageously, the step f) of calculating the users' tastes and the items' flavours comprises alternating an update of the users tastes and the items' flavours and an update of the weight function, preferably by using an expectation-maximization algorithm.

More precisely, the calculating step f) comprises the steps of :

n) assigning every user, from the other users, an initial taste and every item, from the plurality of items, an initial flavour;

o) iteratively updating users' tastes and items' flavours through message passing; and

p) updating the weight function on the basis of the appreciations as well as the updated tastes and flavours.

The invention also provides a recommendation method of an item from a plurality of items to a user, comprising the steps of the method for predicting the user's appreciation of the item of the invention and a step of recommendation of the item to the user if the predicted user's appreciation of the item is at least equal to a threshold.

The invention further provides a recommendation method of an item from a plurality of items to a group of N users, comprising the steps of the method for predicting the user's appreciation of the item of the invention for each of the N users in the group, and a step of recommending the item to the group of N users if the probability that the predicted user's appreciation of the item is at least equal to a threshold for at least k users among the N users of the group, where

$k \leq N$.

The invention also provides a recommendation system adapted to implement the steps of the recommendation method of an item to a single user or to a group of users of the invention.

According to an embodiment, the recommendation system comprises a control module such as a search engine server or a content provider server.

The methods according to the invention may be implemented in software on a programmable apparatus. They may be implemented solely in hardware or in software, or in a combination thereof.

Since the present invention can be implemented in software, the present invention can be embodied as computer readable code for provision to a programmable apparatus on any suitable carrier medium. A carrier medium may comprise a storage medium such as a floppy disk, a CD-ROM, a hard disk drive, a magnetic tape device or a solid state memory device and the like.

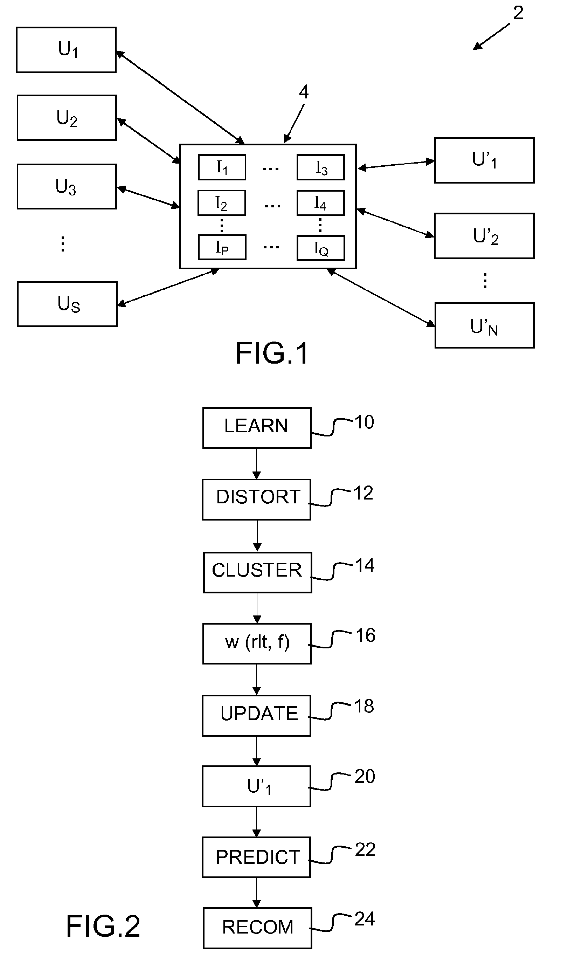

The invention thus provides a computer-readable program comprising computer-executable instructions to enable a computer to perform the recommendation methods of the invention. The diagram of figure 2 illustrates an example of the general algorithm for such computer program.

BRIEF DESCRIPTION OF THE DRAWINGS

The present invention is illustrated by way of examples, and not by way of limitation, in the figures of the accompanying drawings, in which like reference numerals refer to similar elements and in which:

- Figure 1 is a schematic view of an embodiment of a recommendation system according to the invention;

- Figure 2 is a flowchart showing the steps of a recommendation method according to an embodiment of the present invention; and

- Figure 3 shows an example of computation of the users' tastes and the items' flavours.

DETAILED DESCRIPTION OF PREFERRED EMBODIMENTS

Referring to Figure 1, there is shown therein a schematic view of a recommendation system 2 according to a preferred embodiment of the invention.

The recommendation system 2 comprises a database 4 of multimedia items $I_1, I_2,..., I_P,...,I_Q$, such as movies, electronic books, pieces of music, etc.

The recommendation system 2 also comprises a plurality of user devices $U_1, U_2, U_3,..., U_S$, preferably belonging to different users. The user devices are able to access to the database 4 through a network such as the Internet. Thus, each user may search for, rent or purchase any item of the database 4. Besides, the user devices are able to explicitly rate any item of the database. Such rating represents the degree of appreciation of the item by the user.

In the following description, a user will mean a user device, as user devices are assumed to belong to different users. A user device is a terminal like a personal computer, a laptop, a smartphone, a tablet, etc. It comprises at least a memory and a processor for processing data.

Besides, the database 4 of items may be located in a centralized device, such as a server of an electronic library, or in a single user's device or distributed in many locations, such as different user devices.

One purpose of the present invention is to predict, in an anonymous manner, the appreciation, or rating, that a new user, called first user, $U'_1$ would give to an item, for example $I_1$.

The term "new user" means here that said user has never rated the concerned item $I_1$.

The present invention also aims to use such predictions of the appreciations of the first user to recommend him items that will most likely interest him.

The present invention further aims to use the predictions of the appreciations of a group of new users $U'_1$, $U'_2,..., U'_N$, to recommend to said group an item that will please to the majority of the users, for example k users from the N new users.

The flowchart of Figure 2 shows the steps of the method for recommending an item in the database 4 to the first user $U'_1$, upon said first user joins, i.e. accesses to the database 4.

Firstly, at an initialization step 10, the ratings of the users $U_1, U_2, U_3,..., U_S$, called initial users, are learned. This initialization requires a sufficient number S of initial users to share their ratings for items. Thus, the number S will depend on the number Q of items. For example, the number S may be chosen greater than 10*Q.

Then, at a step 12, the learned ratings are distorted by :

1. substituting some of the ratings by other ratings drawn from a suitable probability distribution; and/or

2. suppressing some ratings; and/or
3. adding further ratings that are drawn from a suitable probability distribution.

At a further step 14, the initial users $U_1$, $U_2$, $U_3$,..., $U_S$ are clustered into a finite number of clusters based on the distorted ratings they have given to items. The items $I_1$, $I_2$,..., $I_P$,...,$I_Q$ of the database 4 are also clustered into a finite number of clusters based on the distorted ratings they have received from the initial users. Thus, users and items are clustered into a fixed number of $\mathcal{T}$ user groups and $\mathcal{F}$ item groups, respectively. The clustering may use a suitable algorithm such as spectral clustering, fuzzy c-means clustering, or matrix factorization.

Then, at a step 16, a statistics is determined between a member of the initial users giving a rating r conditioned on the user being in cluster *t* and the item being rated being in cluster *f*. This statistics is referred to as the weight function *w(r|t,f)*.

At a step 18, a user profile, called a taste, is calculated for each initial user and an item profile, called a flavour, is calculated, for each item of the plurality of items in the database 4 on the basis of the weight function and of an anonymous exchange of messages between the initial users and the items.

As an example, a user's taste may constitute an indication of the user's interests like the kind of movies and/or books said user likes.

As a further example, an item's flavour may constitute an indication of the type of content that is involved, for example, when the item is a movie, romantic, action or any other type.

A suitable approach for computing users tastes and items flavours is loopy belief propagation, or more specifically the sum-product algorithm.

The sum-product algorithm is a method to perform exact or approximate inference on a graphical model, for example a Markov random field model, by passing messages between nodes that affect the state of the receiver. In the proposed system, the graphical model is a bipartite graph of users on one hand and items on the other hand.

For every item that a user has rated, an edge exists in the graph, and the edge is labelled by the rating and denoted as $r_{um}$ = 1, ..., $\mathcal{R}$ .

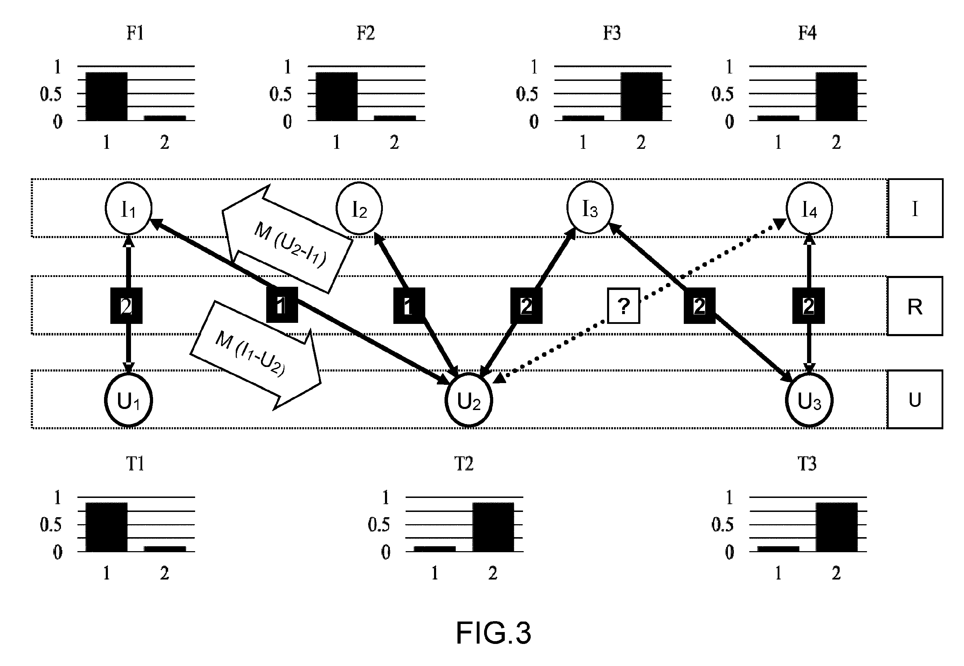

Figure 3 shows an example of such a graphical model for three users and four items. The four circles $I_1$, $I_2$, $I_3$, $I_4$ in the row marked I denote the item nodes, whereas the three circles $U_1$, $U_2$, $U_3$ in the bottom row marked U denote the user nodes.

Each of these nodes represents a random variable.

Users that have rated an item are connected to that item by an edge with a black square indicating the rating. Since not all users have rated all items, many edges are absent from the graph.

The observed ratings allow to determine the previously introduced weight function, which expresses the likelihood of a given rating conditioned on the taste of the user and the flavour of the item.

The goal of message passing on this graphical model is then, to determine the so-called posterior distribution of the random variable of each user and item, subject to the weight function and the observed ratings. After message passing has converged, every random variable will have the posterior distribution that is most compatible with the observed ratings.

The way how these pieces of information are combined to form the message is described by the weight function, which is defined as

$$w(r|t,f) := P[r_{um} = r \,|U_u = t, M_m = f]$$

This function expresses the probability that a user u with taste t would give a rating r to an item m of flavour f. Deriving this function is challenging and crucial, as it determines the messages being exchanged as well as the posterior profiles, as described below.

As described before, with reference to step 14, in the present invention, the weight function *w(r|t,f)* is derived through a clustering algorithm that clusters the users into user groups and the items into item groups.

Subsequently, based on the observed ratings, the weight function that links these user and item groups to ratings is given by

$$w(r|t,f) = \frac{\sum_{(u,m):r_{um}=r} T_u(t) \cdot F_m(f) \cdot w(r|t,f)}{\sum_{r=1}^{\mathcal{R}} \sum_{(u,m):r_{um}=r} T_u(t) \cdot F_m(f) \cdot w(r|t,f)}$$

Based on this weight function, messages can be exchanged according to the sum-product algorithm. After enough such messages have been exchanged, the profiles will typically cease to change. Once this is achieved, updated or posterior profiles $\hat{T}_u(t), \hat{F}_m(f)$ are obtained as the final state of each variable node of the graphical model.

Coming back to the example in Figure 3, let us assume a weight function that has rating 2 corresponding to the user having a taste equal to 1 and the item having a flavour equal to 1, or the user having a taste equal to 2 and a flavour equal to 2:

$$w(1|t = 1, f = 1) = 0.1$$

$$w(2|t = 1, f = 1) = 0.9$$

$$w(1|t = 1, f = 2) = 0.9$$

$$w(2|t = 1, f = 2) = 0.1$$

$$w(1|t = 2, f = 1) = 0.9$$

$$w(2|t = 2, f = 1) = 0.1$$

In Figure 3, the posterior distribution for this weight function of each random variable is indicated as a histogram over the two possible tastes for user nodes and flavours for item nodes.

For instance, the histogram of the taste T2 of the user $U_2$ indicates that the used model determined this user $U_2$ to most likely have a taste equal to 2.

Further, both users $U_2$ and $U_3$ have a taste equal to 2 and they have given a high rating of 2 to the item $I_3$. Correspondingly, the flavour random variable of the item $I_3$ has most of its mass on a flavour equal to 2.

In contrast, the user $U_2$ has given a low rating of 1 to the item $I_1$. This is compatible with the fact that the item $I_1$ has most of its mass on a flavour equal to 1. Thus, it seems that the user $U_2$ likes only the flavour equal to 2 but dislikes the flavour equal to 1.

The messages passed between users and items that are connected by a rating express how likely the sender believes the receiver to have a certain profile, conditional on its own profile. Consider the example of a message sent from a user u to an item m, as the message $M(U_2\text{-}I_1)$ sent from the user $U_2$ to the item $I_1$. The message is based on the taste of the user $U_2$, T2, all the messages that the user $U_2$ has received from the items it is connected to except the message from the receiver, i.e. the item $I_1$, and on the rating of the user $U_2$ for the item $I_1$.

Given the posterior distributions in Figure 3, one may now predict the most likely rating that the user $U_2$ would give to the item $I_4$, indicated with a dashed arrow and a question mark. Based on the taste of the user $U_2$ being a taste of 2 and the flavour of item $I_4$ being a flavour of 2, it is most likely that this rating would be 2.

Based on the message passing phase, a new weight function can be derived and another round of message passing may take place. This alternating between calculating the posterior tastes and flavours, then updating the weight function is called the expectation-maximization algorithm.

Advantageously, the present invention enhances the privacy of users by exchanging messages in an anonymized way. This is feasible because for the item receiving a message to be able to interpret it, all the receiver needs to know is the profile of the sender and the rating. In order for users to be able to interpret the messages from items, one may let an item send the message that corresponds to all possible ratings and the user may then pick the correct message based on knowing the rating it has given to that item.

Advantageously, by using a suitable anonymization method, such as The Onion Router (TOR), the message passing algorithm can be run without revealing which user has rated which item.

Preferably, the messages are distorted to reduce the identifiability of a user with techniques such as adding noise to some messages before sending them and/or suppressing some messages and/or sending additional messages between users and items that would otherwise not exchange messages.

Preferably, to further obfuscate the data of users, the initial users abstain from exchanging messages with a sufficient number of items they have rated and to instead exchange messages with a suitable number of items they have not rated. Since it is not defined what message a user should send to an item it has not rated, several ways exist to generate messages that will only have a negligible effect on the global working of the message passing scheme. As an example, the user could pick a rating uniformly at random. Alternatively, the item might make its profile public and the user could then infer which message to generate in order not to affect the item's profile.

At step 20, the first user U'$_1$ determines its own taste. For this, it initializes its taste to the average taste of the initial users.

Then, at step 22, the first user U'$_1$ predicts its own ratings for the items of the database 4 or only for the items that it is interested on, for example the first item I$_1$. For this, the first user obtains the flavours of said items directly or by using some cryptographic primitives. Then, the first user uses the weight function to calculate the messages that it would receive from these items and adapts its taste accordingly until convergence. Note that in this case, the flavours of the items do not change. The convergence thus occurs when the first user has received a message from every item.

To generate the message sent by an item, all that is needed is the flavour profile of the item and the rating of the first user. Hence, the first user can generate all messages that would be sent by the items themselves. Further, the messages sent by the first user have no effect on the posterior taste of the first user, hence those messages do not have to be produced.

Finally, the actual rating can be predicted solely from the first user's taste and the item's flavour, together with the weight function.

Then, with a given rating weight function $w(r|t,f)$ given as an $\mathcal{R} \times \mathcal{T} \times \mathcal{F}$ tensor, one can calculate the probability that the user u would give a rating r to the first item m as:

$$P[r_{um} = r] = \sum_{t=1}^{\mathcal{T}} \sum_{f=1}^{\mathcal{F}} T_u(t) \cdot F_m(f) \cdot w(r|t,f) \ .$$

Assuming that user and item profiles have been determined, those profiles allow generating a recommendation, at step 24, to the first user U'$_1$. For this, the predicted ratings of the first user are compared to a threshold r$_{min}$ and the items whose ratings are at least equal to said threshold are recommended to the first user.

Advantageously, the present invention enables the generation of a recommendation to the group of new users U'$_1$, U'$_2$,..., U'$_N$. For example, to order items by how much said group of users would enjoy them, one may define a metric such as the following: what is the probability that *k* of the *N* members of the group would give at least a rating of r$_{min}$. This probability is given by:

$$\sum_{s \in P_{\geq k}(G)} \sum_{f=1}^{\mathcal{F}} F_m(f) \sum_{t_u, \forall u \in G} T_u(t_u) \sum_{\substack{r_u \geq r_{min} \\ \forall u \in s}} \sum_{\substack{r_u < r_{min} \\ \forall u \notin s}} \left\{ \prod_{u \in G} w(r_u | t_u, f) \right\}$$

where $P_{\geq k}(G)$ denotes the set of power sets of *G* of cardinality *k* or greater.

While there has been illustrated and described what are presently considered to be the preferred embodiments of the present invention, it will be understood by those skilled in the art that various other modifications may be made, and equivalents may be substituted, without departing from the true scope of the present invention. Additionally, many modifications may be made to adapt a particular situation to the teachings of the present invention without departing from the central inventive concept described herein. Furthermore, an embodiment of the present invention may not include all of the features described above. Therefore, it is intended that the present invention not be limited to the particular embodiments disclosed, but that the invention includes all embodiments falling within the scope of the appended claims.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed as a reference to the plural and vice versa.

A person skilled in the art will readily appreciate that various parameters disclosed in the description may be modified and that various embodiments disclosed and/or claimed may be combined without departing from the scope of the invention.

## Claims

1. Method for predicting a first user's appreciation of a first item ($I_1$) from a plurality of items ($I_1, ..., I_P, ..., I_Q$), comprising the following steps:

   a) learning (10) at least a first appreciation of the first user ($U'_1$) for at least one second item of the plurality of items ($I_1, ..., I_P, ..., I_Q$), said second item being different from the first item ($I_1$);
   b) learning (10) other appreciations of other users ($U_1, ..., U_S$), different from said first user ($U'_1$), of the plurality of items ($I_1, ..., I_P, ..., I_Q$);
   c) clustering (14) the users into a finite number of user clusters based on said appreciations;
   d) clustering (14) the plurality of items into a finite number of item clusters based on said appreciations;
   e) establishing (16) a weight function $w(r|t,f)$ that expresses statistics of a user giving an appreciation $r$ for an item $i$ conditioned on the user being in a user cluster $t$ and the item being in an item cluster $f$;
   f) calculating (18, 20) for each user, including the first user ($U'_1$), his user profile, called taste, and for each item of the plurality of items its item profile, called flavour, by exchanging messages between all user-item pairs for which the appreciations are known, said messages being derived from the appreciation of the item by the user in each pair and from the weight function; and
   g) predicting (22) the first user's appreciation of the first item ($I_1$) on the basis of the calculated taste of the first user ($U'_1$), the calculated flavour of the first item ($I_1$) and the weight function.

2. Method of claim 1, wherein the appreciation r is an integer, preferably comprised between 1 and 5.

3. Method of claim 1 or 2, wherein the taste of a user is expressed as a probability distribution over a finite number of possible tastes and the flavour of an item is expressed as a probability distribution over a finite number of possible flavours.

4. Method of any of claims 1 to 3, wherein the method comprises a step of distortion of the appreciations before the steps c) and d) of clustering (14) the users and the items.

5. Method of claim 4, wherein the step of distortion of the appreciations comprises:

   h) substituting at least one of the appreciations by another appreciation drawn from a suitable probability distribution; and/or
   i) suppressing at least one of the appreciations; and/or
   j) adding at least one further appreciation that is drawn from a suitable probability distribution.

6. Method of any of claims 1 to 5, wherein the exchanged messages are distorted by:

   k) adding noise to at least one message; and/or
   l) suppressing at least one message; and/or
   m) adding at least one message, particularly between a user and an item who did not exchange messages.

7. Method of any of claims 1 to 6, wherein the exchanged messages are numerical vectors.

8. Method of any of claims 1 to 7, wherein the step f) of calculating the users' tastes and the items' flavours comprises alternating an update of the users tastes and the items' flavours and an update of the weight function, preferably by using an expectation-maximization algorithm.

9. Method of claim 8, wherein the calculating step f) comprises the steps of :

n) assigning every user, from the other users, an initial taste and every item, from the plurality of items, an initial flavour;
o) iteratively updating users' tastes and items' flavours through message passing; and
p) updating the weight function on the basis of the appreciations as well as the updated tastes and flavours.

10. Recommendation method of an item from a plurality of items to a user ($U'_1$), comprising the steps of the method for predicting the user's appreciation of the item of any of claims 1 to 9 and a step of recommendation (24) of the item to the user if the predicted user's appreciation of the item is at least equal to a threshold.

11. Recommendation method of an item from a plurality of items to a group of N users ($U'_1,...,U'_N$) comprising the steps of the method for predicting the user's appreciation of the item of any of claims 1 to 9 for each of the N users in the group, and a step of recommending the item to the group of N users if the probability that the predicted user's appreciation of the item is at least equal to a threshold for at least k users among the N users of the group, where $k \leq N$.

12. Recommendation system adapted to implement the steps of the recommendation method of an item of claim 10 or 11.

13. Computer-readable program comprising computer-executable instructions to enable a computer to perform the recommendation method of claim 10 or 11.

2

4

| U₁ |

| U₂ |

| U₃ |

⋮

| Uₛ |

| I₁ | ··· | I₃ |
| I₂ | ··· | I₄ |
| Iₚ | ··· | I_Q |

| U'₁ |

| U'₂ |

⋮

| U'ₙ |

## FIG.1

| LEARN | 10 |
| DISTORT | 12 |
| CLUSTER | 14 |
| w (rlt, f) | 16 |
| UPDATE | 18 |
| U'₁ | 20 |
| PREDICT | 22 |
| RECOM | 24 |

## FIG.2

FIG.3

EP 2 744 219 A1

Europäisches
Patentamt

European
Patent Office

Office européen
des brevets

**EUROPEAN SEARCH REPORT**

Application Number

EP 12 30 6589

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/256017 A1 (MURAKAMI TOMOKO [JP]) 16 October 2008 (2008-10-16) * paragraph [0032] - paragraph [0048]; figures 1-4 * | 1-13 | INV. H04N21/442 G06Q30/02 |
| X | US 2011/208617 A1 (WEILAND CHRIS [US]) 25 August 2011 (2011-08-25) * paragraph [0023] - paragraph [0038]; figures 1-6 * | 1-13 | |
| X | WO 02/01439 A2 (MUSICGENOME COM INC [US]; GANG DAN [IL]; LEHMANN DANIEL [IL]) 3 January 2002 (2002-01-03) * page 3 - page 10; figures 1,2 * | 1-13 | |
| X | US 2003/089218 A1 (GANG DAN [IL] ET AL) 15 May 2003 (2003-05-15) * paragraph [0042] - paragraph [0126] * | 1-13 | |
| X | WO 2012/013996 A1 (GRAVITY RES & DEV KFT [HU]; PILASZY ISTVAN [HU]; TIKK DOMONKOS [HU]; T) 2 February 2012 (2012-02-02) * page 3 - page 30; figures 1-3a * | 1-13 | TECHNICAL FIELDS SEARCHED (IPC) H04N G06Q |
| X | US 6 636 836 B1 (PYO SOON-KYU [KR]) 21 October 2003 (2003-10-21) * column 4 - column 8; figures 1-6 * | 1-13 | |
| X | US 6 370 513 B1 (KOLAWA ADAM K [US] ET AL) 9 April 2002 (2002-04-09) * column 5 - column 16 * | 1-13 | |
| X | US 2010/191680 A1 (LEE JAE-HWANG [KR] ET AL) 29 July 2010 (2010-07-29) * paragraph [0008] - paragraph [0057] * | 1-13 | |

-/--

The present search report has been drawn up for all claims

| Place of search | Date of completion of the search | Examiner |
|---|---|---|
| Munich | 28 March 2013 | Lavin Liermo, Jesus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

Europäisches
Patentamt

European
Patent Office

Office européen
des brevets

**EUROPEAN SEARCH REPORT**

Application Number

EP 12 30 6589

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/300547 A1 (BATES KEITH M [CA] ET AL) 3 December 2009 (2009-12-03) * paragraph [0037] - paragraph [0189] * ----- | 1-13 | |
| X | EP 1 300 781 A2 (SONY CORP [JP]) 9 April 2003 (2003-04-09) * paragraph [0041] - paragraph [0105]; figures 1-5 * ----- | 1-13 | |
| X | US 2008/120650 A1 (ORIHARA RYOHEI [JP] ET AL) 22 May 2008 (2008-05-22) * paragraph [0062] - paragraph [0124] * ----- | 1-13 | |
| X | WO 2012/155329 A1 (NOKIA CORP [FI]; TIAN JILEI [CN]; BAO TENGFEI [CN]; CAO HAPPIA [CN]; C) 22 November 2012 (2012-11-22) * paragraph [0026] - paragraph [0056] * ----- | 1-13 | |
| X | EP 2 428 926 A2 (SONY CORP [JP]) 14 March 2012 (2012-03-14) * paragraph [0024] - paragraph [0106] * ----- | 1-13 | **TECHNICAL FIELDS SEARCHED (IPC)** |

The present search report has been drawn up for all claims

| Place of search | Date of completion of the search | Examiner |
|---|---|---|
| Munich | 28 March 2013 | Lavin Liermo, Jesus |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 12 30 6589

This annex lists the patent family members relating to the patent documents cited in the above-mentioned European search report.
The members are as contained in the European Patent Office EDP file on
The European Patent Office is in no way liable for these particulars which are merely given for the purpose of information.

28-03-2013

| Patent document cited in search report | | Publication date | Patent family member(s) | | Publication date |
|---|---|---|---|---|---|
| US 2008256017 | A1 | 16-10-2008 | CN | 101286217 A | 15-10-2008 |
| | | | JP | 5032183 B2 | 26-09-2012 |
| | | | JP | 2008262398 A | 30-10-2008 |
| | | | US | 2008256017 A1 | 16-10-2008 |
| US 2011208617 | A1 | 25-08-2011 | NONE | | |
| WO 0201439 | A2 | 03-01-2002 | AU | 6781501 A | 08-01-2002 |
| | | | AU | 7095301 A | 08-01-2002 |
| | | | EP | 1297471 A1 | 02-04-2003 |
| | | | EP | 1297474 A1 | 02-04-2003 |
| | | | JP | 2004510176 A | 02-04-2004 |
| | | | JP | 2004522177 A | 22-07-2004 |
| | | | US | 2003055516 A1 | 20-03-2003 |
| | | | WO | 0201438 A2 | 03-01-2002 |
| | | | WO | 0201439 A2 | 03-01-2002 |
| US 2003089218 | A1 | 15-05-2003 | NONE | | |
| WO 2012013996 | A1 | 02-02-2012 | NONE | | |
| US 6636836 | B1 | 21-10-2003 | NONE | | |
| US 6370513 | B1 | 09-04-2002 | NONE | | |
| US 2010191680 | A1 | 29-07-2010 | KR | 20100086676 A | 02-08-2010 |
| | | | US | 2010191680 A1 | 29-07-2010 |
| US 2009300547 | A1 | 03-12-2009 | CA | 2634020 A1 | 30-11-2009 |
| | | | US | 2009300547 A1 | 03-12-2009 |
| EP 1300781 | A2 | 09-04-2003 | CN | 1410913 A | 16-04-2003 |
| | | | EP | 1300781 A2 | 09-04-2003 |
| | | | EP | 1923803 A1 | 21-05-2008 |
| | | | JP | 4326174 B2 | 02-09-2009 |
| | | | JP | 2003114903 A | 18-04-2003 |
| | | | KR | 20030029034 A | 11-04-2003 |
| | | | US | 2003088871 A1 | 08-05-2003 |
| US 2008120650 | A1 | 22-05-2008 | JP | 4358219 B2 | 04-11-2009 |
| | | | JP | 2008131339 A | 05-06-2008 |
| | | | US | 2008120650 A1 | 22-05-2008 |
| WO 2012155329 | A1 | 22-11-2012 | NONE | | |
| EP 2428926 | A2 | 14-03-2012 | CN | 102402569 A | 04-04-2012 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 12 30 6589

This annex lists the patent family members relating to the patent documents cited in the above-mentioned European search report.
The members are as contained in the European Patent Office EDP file on
The European Patent Office is in no way liable for these particulars which are merely given for the purpose of information.

28-03-2013

| Patent document cited in search report | Publication date | Patent family member(s) | Publication date |
|---|---|---|---|
| | | EP 2428926 A2 | 14-03-2012 |
| | | JP 2012058972 A | 22-03-2012 |
| | | US 2012059788 A1 | 08-03-2012 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2434723 A


**Non-patent literature cited in the description**

- **BYUNG-HAK KIM ; ARVIND YEDLA ; HENRY D. PFISTER.** IMP: A Message-Passing Algorithm for Matrix Completion. *6th International Symposium on Turbo Codes and Iterative Information Processing,* 06 September 2010, 462-466